**Europäisches Patentamt**

**European Patent Office**

**Office européen des brevets**

(19)

(11) Veröffentlichungsnummer : **0 011 162**
**B1**

(12) **EUROPÄISCHE PATENTSCHRIFT**

(45) Veröffentlichungstag der Patentschrift :
**21.10.81**

(51) Int. Cl.³ : **C 08 G 18/08**, C 08 G 18/32,
**D 06 M 15/52**

(21) Anmeldenummer : **79104137.9**

(22) Anmeldetag : **25.10.79**

(54) **Wasserlösliche, ultrafiltrierbare Polyurethan-Anionomere und ihre Verwendung als Schlichtemittel in der Textilindustrie.**

(30) Priorität : **08.11.78 DE 2848431**

(43) Veröffentlichungstag der Anmeldung :
**28.05.80 (Patentblatt 80/11)**

(45) Bekanntmachung des Hinweises auf die Patenterteilung : **21.10.81 Patentblatt 81/42**

(84) Benannte Vertragsstaaten :
**BE CH DE FR GB IT NL SE**

(56) Entgegenhaltungen :

**FR - A - 1 279 244**
**FR - A - 2 185 042**
**FR - A - 2 308 646**
**FR - A - 2 376 168**
**US - A - 3 412 054**

(73) Patentinhaber : **BAYER AG**
**Zentralbereich Patente, Marken und Lizenzen**
**D-5090 Leverkusen 1, Bayerwerk (DE)**

(72) Erfinder : **Dieterich, Dieter, Dr.**
**Ludwig-Girtler-Strasse 1**
**D-5090 Leverkusen (DE)**

Imprimerie Jouve, 17, rue du Louvre, 75001 Paris, France

## Wasserlösliche, ultrafiltrierbare Polyurethan-Anionomere und ihre Verwendung als Schlichtemittel in der Textilindustrie

Gegenstand der vorliegenden Erfindung sind neue wasserlösliche, ultrafiltrierbare Polyurethananionomere hoher Härte, sowie ihre Verwendung als regenerierbare Schlichtemittel in der Textilindustrie.

Wäßrige Lösungen von Polyurethanen oder Polyurethanharnstoffen sind seit langem bekannt (vgl. z.B. Angewandte Chemie, *82,* (1970) Seiten 53-55, dort Lit. Zit. 4-8, 10a).

Die in den bekannten, in Wasser löslichen Polyurethanen bzw. Polyurethanharnstoffen eingebauten hydrophilen Zentren können sowohl salzartige, d.h. ionische Gruppen als auch hydrophile nichtionische Gruppen darstellen.

Zu den erstgenannten « Polyurethanionomeren » gehören sowohl chemisch fixierte Kationen, d.h. insbesondere chemisch eingebaute Ammoniumionen aufweisende Polyurethane als auch chemisch fixierte Anionen, d.h. insbesondere chemisch eingebaute Sulfonat- oder Carboxylatgruppen aufweisende Polyurethane. Zu den letztgenannten nichtionischen in Wasser löslichen Polyurethanen gehören insbesondere die Polyäthylenoxidketten aufweisenden Polyurethane bzw. Polyurethanharnstoffe.

Die bisher bekannten wasserlöslichen Polyurethananionomeren sind entweder Polyelektrolyte mit einem Ionengruppengehalt > 100 Milliäquivalente/100 g u. hoher Härte, welche jedoch spröde, oft hygroskopisch u. aufwendig herzustellen sind, oder aber es handelt sich um mehr oder weniger elastomere hochflexible Polyurethane, die in üblicher Weise auf der Basis von Polyestern und/oder Polyäthern aufgebaut sind. Die letztgenannten Produkte sind infolge ihres Gehalts an Polyäthylenglykoläthersequenzen, gegebenenfalls in Kombination mit ionischen Gruppen wasserlöslich.

Auch Ionengruppen enthaltende Polyester verleihen den daraus hergestellten Polyurethanen Wasserlöslichkeit. Im Hinblick auf eine Verwendung als Schlichtemittel in der Textilindustrie sind die hoch ionischen Produkte wegen ihrer Sprödigkeit in trockenem und ihrer Oberflächenklebrigkeit im feuchten Zustand nicht geeignet.

Produkte mit längeren Polyäthersequenzen sind zu weich und im Griff zu wenig glatt. Ionische Polyesterurethane schließlich lassen sich zwar mit dem gewünschten mechanischen Eigenschaftsbild herstellen, sie neigen jedoch im wäßrigen Medium zu hydrolytischem Abbau und sind daher nicht durch Ultrafiltration regenerierbar. Die Regenerierbarkeit aus den bei der Entschlichtung anfallenden Abwässern wird jedoch in zunehmendem Maße gefordert.

Es war daher die Aufgabe der vorliegenden Erfindung wasserlösliche Polyurethananionomere zur Verfügung zu stellen, die nicht mehr mit den genannten Nachteilen behaftet sind, und die daher allen an Schlichtemittel für die Textilindustrie zu stellenden Anforderungen genügen.

Diese Aufgabe konnte mit den nachstehend näher beschriebenen erfindungsgemäßen Polyurethananionomeren gelöst werden. Sie sind hart, von glatter Oberfläche, nicht spröde, zäh, gut löslich in Wasser, nicht hydrolysierend und daher gut dialysierbar und ultrafiltrierbar. 10-20 proz. wäßrige Lösungen sind niedrig-viskos.

Gegenstand der vorliegenden Erfindung sind wasserlösliche, ultrafiltrierbare Polyurethan-Anionomere, die, gegebenenfalls unter Mitverwendung von jeweils maximal 5 Mol-% an ein- und/oder höherwertigen Alkoholen, bezogen auf die Gesamtmenge der nachstehend genannten Komponenten b) -d), durch Umsetzung von

a) organischen Diisocyanaten des Molekulargewichtsbereichs 160 bis 300 mit

b) Tri- und/oder Tetraäthylenglykol,

c) gegebenenfalls weiteren aliphatischen Diolen des Molekulargewichtsbereichs 62 bis 200, unter Mitverwendung von

d) Carboxyl-, Carboxylat-, Sulfonsäure-und/oder Sulfonatgruppen aufweisenden Diolen eines unter 500 liegenden Molekulargewichts

in einem unter 1:1 liegenden NCO/OH-Äquivalentverhältnis hergestellt worden sind, wobei gegebenenfalls vorliegende Carboxyl- oder Sulfonsäuregruppen im Anschluß an die Umsetzung zumindest teilweise in Carboxylat oder Sulfonatgruppen überführt worden sind, gekennzeichnet durch einen Gehalt an

e) Urethangruppen $-NH-CO-O-$ von 25 bis 40 Gew.-%,

f) Hydroxylgruppen von 0,03 bis 1,5 Gew.-%,

g) Carboxylatgruppen $-COO^-$ und/oder Sulfonatgruppen $-SO_3^-$ von 10-80 Milliäquivalenten pro 100 g und

h) jeweils zwischen zwei Urethangruppen oder zwischen einer Urethangruppe und Wasserstoff eingebauten Tri- und/oder Tetraäthylenglykoleinheiten $-(O-CH_2CH_2-)_{3-4}$ von 10 bis 40 Gew.-%.

Gegenstand der vorliegenden Erfindung ist auch die Verwendung dieser Polyurethananionomeren als Schlichtemittel in der Textilindustrie.

Ausgangsmaterialien zur Herstellung der erfindungsgemäßen Polyurethananionomeren sind

a) organische Diisocyanate des Molekulargewichtsbereichs 160-300, vorzugsweise 174-250. Bevorzugt sind aromatische Diisocyanate, insbesondere 2,4-Diisocyanatotoluol, 2,6-Diisocyanato-toluol, 4,4'-Diisocyanatodiphenylmethan, 2,4'-Diisocyanatodiphenylmethan sowie Gemische dieser Diisocyanate. Aliphatische Diisocyanate wie z.B. Hexamethylendiisocyanat sind ebenfalls geeignet jedoch weniger bevorzugt. Die Mitverwendung von Monoisocyanaten wie z.B. Phenylisocyanat ist in geringen Mengen von maximal 5 Mol-%, bezogen auf die Gesamtisocyanatkomponente möglich.

b) Triäthylenglykol oder Tetraäthylenglykol oder technische Gemische dieser Glykole.

c) Sonstige niedermolekulare Diole des Molekulargewichtsbereichs 62-200 wie z.B. Äthylenglykol, Diäthylenglykol, 1,2-Propylenglykol, Dipropylenglykol, 1,3-Dihydroxypropan, 1,4-Dihydroxybutan, Neopentylglykol, 1,5-Dihydroxypentan oder 1,6-Dihydroxyhexan. Die Mitverwendung dieser Glykole ist bei der Herstellung der erfindungsgemäßen Polyadditionsprodukte nicht zwingend erforderlich, jedoch besonders bei Verwendung von Diisocyanatotoluol oder aliphatischen Diisocyanaten in Kombination mit Tetraäthylenglykol vorteilhaft.

d) Diole eines unter 500 liegenden Molekulargewichts, welche freie Carboxyl-, Carboxylat-, Sulfonsäure- oder Sulfonatgruppen enthalten, wie sie z.B. in US-PS 3 412 054, DE-OS 2 417 664 (GB-PS 1 447 DE-OS 2 410 862 (US-PS 4 048 221), DE-OS 2 426 401 (GB-PS 1 455 554), DE-OS 2 437 218 (US-PS 4 056 564) oder in der deutschen Patentanmeldung P 27 19 372.2 beschrieben sind. Bevorzugt sind $\alpha,\alpha$-Dimethylolpropionsäure, $\alpha,\alpha$-Dimethylolbuttersäure bzw. deren Salze, insbesondere Alkali- und besonders bevorzugt Natriumsalze, sowie die Salze, insbesondere Alkali- und besonders bevorzugt Natriumsalze der 1,4-Dihydroxybutansulfonsäure (2) oder 3,4-Dihydroxybutansulfonsäure-(1) bzw. deren Alkoxylierungsprodukte eines unter 500 liegenden Molekulargewichts. Die Sulfonatgruppen aufweisenden Aufbaukomponenten sind besonders bevorzugt.

Nebel den unter b) - d) genannten Hydroxylgruppen aufweisenden, Aufbaukomponenten können bei der Herstellung der erfindungsgemäßen Polyadditionsprodukte auch einwertige Alkohole wie z.B. Äthanol, Isopropanol oder n-Octanol und/oder höherwertige Alkohole wie z.B. Trimethylolpropan oder Glycerin in Mengen von jeweils maximal 5 Mol-%, bezogen auf die Gesamtmenge der Komponenten b) - d) mitverwendet werden.

Im Falle der Verwendung von Carboxyl- oder Sulfonsäuregruppen aufweisenden Aufbaukomponenten d) werden die Säuregruppen im Anschluß an die Polyadditionsreaktion zumindest teilweise durch Neutralisation in Carboxylat- bzw. Sulfonatgruppen überführt.

Die Art und Mengenverhältnisse der Reaktionspartner werden im übrigen so gewählt, daß in den erfindungsgemäßen Polyadditionsprodukten die oben angegebenen Gruppen e) - h) in den angegebenen Konzentrationen vorliegen. Bei Verwendung von Diisocyanatotoluol als Isocyanatkomponente liegt der Urethangehalt vorzugsweise bei 30-34 Gew.-%, der Hydroxylgehalt bei 0,03 bis 0,6 Gew.-% der Ionengehalt bei 10-60 Milliäquivalenten pro 100 g und der Gehalt an Tri- bzw. Tetraäthylenoxideinheiten bei 10-35 Gew.-%. Bei Verwendung von 2,4'- bzw. 4,4'-Diisocyanatodiphenylmethan als Isocyanatkomponente liegt der Urethangehalt vorzugsweise bei 25-30 Gew.-%, der Hydroxylgehalt bei 0,1-1,5 Gew.-%, der Ionengruppengehalt bei 20-80 Milliäquivalenten pro 100 g und der Gehalt an Tri- bzw. Tetraäthylenglykoleinheiten bei 20-40 Gew.-%.

Bei Verwendung der genannten bevorzugten Diisocyanate werden die Art der übrigen Ausgangskomponenten sowie die Mengenverhältnisse der Reaktionspartner so gewählt, daß die Produkte bezüglich ihrer Zusammensetzung den genannten Daten entsprechen.

Aus dem genannten Hydroxylgruppengehalt geht bereits hervor, daß bei der Herstellung der Polyadditionsprodukte stets in einem unter 1: 1 liegenden NCO/OH-Äquivalentverhätnis gearbeitet wird. Dieses Verhältnis liegt im allgemeinen zwischen 0,9: 1 und 0,995 : 1 insbesonders zwischen 0,95 : 1 und 0,99 : 1.

Die Herstellung der erfindungsgemäßen Polyurethane ist denkbar einfach und wird vorzugsweise in der Schmelze durchgeführt. Hierzu werden die Hydroxylgruppen aufweisenden Aufbaukomponenten gemischt und bei ca. 10 bis 130 °C, vorzugsweise 15-80 °C das Diisocyanat auf einmal oder auch in zwei oder mehreren Portionen zugesetzt. Die Temperatur während der Reaktion sollte 210 °C nicht übersteigen.

Es kann zweckmäßig sein, geringe Mengen einer Säure (z.B. 0,05 bis 0,8 Gew.-%, bezogen auf die Menge der Aufbaukomponente d)), z.B. Phosphorsäure zur Desaktivierung zuzusetzen. Man kann die homogen durchmischte Reaktionsmasse ca. 1-2 Minuten nach der Isocyanatzugabe in noch dünnflüssigem Zustand in Formen, auf Bleche oder auf ein Bad gießen und die Reaktion durch Tempern zu Ende führen, man kann aber auch beispielsweise kontinuierlich in einer Reaktionsschnecke oder einem Rohr arbeiten und das Reaktionsprodukt als Strang oder als vikose Schmelze entnehmen.

Nach Abkühlung sind die erfindungsgemäßen Reaktionsprodukte harte, zähe transparente oder schwach opake Harze, die bei Temperaturen zwischen 20 und 95° glatt in Wasser löslich sind. Sofern die zu lösenden Polyurethane freie Carboxyl- und/oder Sulfonsäure-Gruppen Aufweisen, sollte dem Wasser eine etwa äquivalente Menge an Alkali, Ammoniak oder einem Amin zugesetzt werden. Der pH-Wert der wäßrigen Polyurethan-Lösung sollte etwa 4-9 (vorzugsweise 6-8) betragen. Es kann sich um echte Lösungen oder auch um Sole handeln, die bei Verdünnung auf z.B. 5 % schwach opalescent sind und Tyndall-Effekt zeigen.

Beim Auftrocknen einer Probe der wäßrigen Lösung auf z.B. Silikongummi-Platten werden harte, zähe, transparente bis schwach opake Filme erhalten, die beim Biegen hochelastisch zurückfedern und nicht spröde sind. Sie weisen eine glatte glänzende Oberfläche auf und sind unverändert wasserlöslich. Die Filmbildung ist hervorragend ; Risse, Streifen und Krater werden nicht beobachtet.

Die wäßrigen Lösungen schäumen nicht und sind frei von Salzen. Sie sind bis zu einem Feststoffgehalt von ca. 25 % dünnflüssig und neigen auch bei längerer Lagerung und erhöhter Temperatur nicht zur Hydrolyse. Sie sind infolgedessen dialysierbar und ultrafiltrierbar, erfüllen also alle Anforderungen an ein regenerierbares und daher umweltfreundliches Schlichtemittel.

Die erfindungsgemäßen Produkte können wahlweise entweder schon beim Hersteller in Wasser gelöst werden oder aber als Festprodukte gelagert und versandt und erst beim Verarbeiter in Wasser gelöst werden.

Aufgrund des geschilderten Eigenschaftsbilds sind sie hervorragend als Schlichtemittel in der Textilindustrie geeignet. Sie umhüllen die Faser mit einem zähen glatten Film und machen sie dadurch ausgezeichnet widerstandsfähig gegen mechanische Beschädigung. Die Entschlichtung ist einfach, schnell und ohne Abbau möglich ; die Abwässer aus der Entschlichtung können leicht durch Ultrafiltration aufkonzentriert und wiederverwendet werden.

Ferner eignen sich die erfindungsgemäßen Polyurethane auch zur Herstellung hydrophiler Gele. Hierzu werden sie durch geringe Mengen von Polyisocyanaten oder Formaldehyd(-derivaten) vernetzt.

Je nach den gestellten Anforderungen können die vernetzten oder auch die unvernetzten Polyurethane auch als vielseitig verwendbare Überzugsmittel, Bindemittel und Kleber, z.B. zur Herstellung saugfähiger Vliese verwendet werden.

In den nachfolgenden Beispielen stellen alle Prozentangaben Gewichtsprozente dar.

Beispiel 1

416 g (4 Mol) Neopentylglykol, 873 g (4,5 Mol) Tetraäthylenglykol und 645 g (1,5 Mol) propoxyliertes Natriumsalz der 1,4-Dihydroxybutansulfonsäure-(2) des Molekulargewichts 430 («Sulfonat-Diol») werden vermischt und mit 1,2 g Orthophosphorsäure desaktiviert. Unter gutem Rühren werden 1 705 g (9,8 Mol) Toluylendiisocyanat (80 % 2,4-, 20 % 2,6-Isomeres) zugesetzt. Die Reaktionsmasse wird, sobald 50-70 °C erreicht sind, auf Blende ausgegossen, wo rasch unter Temperaturanstieg bis 180 °C Aushärtung erfolgt. Die Masse wird 3 Stunden bei 100 °C getempert und anschließend 15-proz. in Wasser gelöst.

Kenndaten des festen Produkts (berechnet) :
Urethan-Gruppen : 31,8 %
OH-Gruppen : 0,18 %
$SO_3^{(-)}$-Gruppen : 41 m Äquiv./100 g
$-(O-CH_2-CH_2-)_4$-Gruppen : 24 %
Viskosität der 15-proz. wäßr. Lösung : 3,8 mPas/sec.

Beispiel 2

Es wird wie im Beispiel 1 verfahren, jedoch werden 9,9 Mol Toluylendiisocyanat zugesetzt.
Urethan-Gruppen : 31,9 %
OH-Gruppen : 0,09 %
$SO_3^{(-)}$-Gruppen : 41 m Äquiv./100 g
$-(O-CH_2-CH_2-)_4$-Gruppen : 24 %
Viskosität der 15-proz. wäßr. Lösung 4,9 mPas/sec.

Beispiel 3

Es wird wie in Beispiel 1 verfahren, jedoch werden 9,95 Mol Toluylendiisocyanat zugesetzt.
Urethan-Gruppen : 32,0 %
OH-Gruppen : 0,05 %
$SO_3^{(-)}$-Gruppen : 40 m Äquiv./100 g
$-(O-CH_2-CH_2-)_4$-Gruppen : 24 %
Viskosität der 15-proz. wäßr. Lösung 5,0 mPas/sec.

Beispiel 4

1 275 g (8,5 Mol) Triäthylenglykol und 645 g (1,5 Mol) «Sulfonat-Diol» werden vermischt und mit 1,2 g Orthophosphorsäure desaktiviert. Unter gutem Rühren werden 1 723 g (9,9 Mol) Toluylendiisocyanat (80 % 2,4-, 20 % 2,6-Isomeres) zugesetzt. Die Reaktionsmasse wird bei ca. 80 °C auf Bleche ausgegossen, wo rasch unter Temperaturanstieg Aushärtung erfolgt. Die Masse wird 3 Stunden bei 100 °C getempert und anschließend 15-proz. in Wasser gelöst. Kenndaten des festen Produkts (berechnet) :
Urethan-Gruppen : 32,0 %
OH-Gruppen : 0,09 %
$SO_3^{(-)}$-Gruppen : 41 m Äquiv./100 g
$-(O-CH_2-CH_2-)_3$-Gruppen : 35 %
Viskosität der 15-proz. wäßr. Lösung 3,7 mPas/sec.

Beispiel 5

155 g (0,8 Mol) Tetraäthylenglykol und 26,8 g (0,2 Mol) Dimethylolpropionsäure werden auf 120 °C erwärmt bis die Dimethylolpropionsäure in Lösung gegangen ist und die klare Lösung auf 90 °C abgekühlt. Dann werden 225 g (0,9 Mol) 4,4'-Diisocyanatodiphenylmethan zugesetzt. Sobald die Reaktionsmischung klar geworden ist, wird sie auf ein Blech ausgegossen und nach Verfestigung 1,5 Stunden bei 100 °C nachgeheizt. Das harte zähe Harz ist in reinem Wasser unlöslich. Es löst sich jedoch in einer 5-proz. wäßrigen Lösung von Dimethylaminoäthanol zu einem schwach opaken Sol.
Kenndaten des festen Produkts (berechnet) :
Urethan-Gruppen : 26,1 %
OH-Gruppen/0,84 %
$COO^{(-)}$-Gruppen : 49 m Äquiv./100 g
$-(-O-CH_2-CH_2-)_4$-Gruppen : 34,7 %

Vergleichsversuch

Es wird gemäß Beispiel 1 gearbeitet, jedoch mit folgender Rezeptur : 900 g (8,5 Mol) Diäthylenglykol, 645 g (1,5 Mol) «Sulfonat-Diol» 1 705 g (9,8 Mol) Toluylendiisocyanat.

Das erhaltene Produkt ist spröde. Kenndaten :
Urethan-Gruppen : 35,7 %
OH-Gruppen : 0,21 %
$SO_3^{(-)}$-Gruppen : 46 m Äquiv./100 g
$-(-O-CH_2-CH_2-)_{3-4}$ : 0 %

**Ansprüche**

1. Wasserlösliche, ultrafiltrierbare Polyurethananionomere, die, gegebenenfalls unter Mitverwendung von jeweils maximal 5 Mol-% an ein- und/oder höherwertigen Alkoholen, bezogen auf die Gesamtmenge der nachstehend genannten Komponenten b) - d), durch Umsetzung von
a) organischen Diisocyanaten des Molekulargewichtsbereichs 160 bis 300 mit
b) Tri- und/oder Tetraäthylenglykol,
c) gegebenenfalls weiteren aliphatischen Diolen des Molekulargewichtsbereichs 62 bis 200, unter Mitverwendung von
d) Carboxyl-, Carboxylat-, Sulfonsäure- und/oder Sulfonatgruppen aufweisenden Diolen eines unter 500 liegenden Molekulargewichts
in einem unter 1: 1 liegenden NCO/OH-Äquivalentverhältnis hergestellt worden sind, wobei gegebenenfalls vorliegende Carboxyl oder Sulfonsäuregruppen im Anschluß an die Umsetzung zumindestens teilweise in Carboxylat oder Sulfonatgruppen überführt worden sind, gekennzeichnet durch einen Gehalt an
e) Urethangruppen $-NH-CO-O-$ von 25 bis 40 Gew.-%,
f) Hydroxylgruppen von 0,03 bis 1,5 Gew.-%,
g) Carboxylatgruppen $-COO^-$ und/oder Sulfonatgruppen $-SO_3^-$ von 10-80 Milliäquivalenten pro 100 g und
h) jeweils zwischen zwei Urethangruppen oder zwischen einer Urethangruppe und Wasserstoff eingebauten Tri- und/oder Tetraäthylenglykoleinheiten $-(OCH_2CH_2-)_{3-4}$ von 10 bis 40 Gew.-%.
2. Verwendung der Polyurethananionomeren gemäß Anspruch 1 als Schlichtemittel in der Textilindustrie.

**Claims**

1. Water-soluble, ultrafiltrable polyurethane anionomers which have been prepared, optionally also using at most 5 mol % in each case of monohydric and/or higher alcohols, based on the total quantity of the components b) - d) indicated below, by reacting
a) organic diisocyanates having molecular weights of from 160 to 300 with,
b) Tri- and/or tetra-ethylene glycol,
c) optionally other aliphatic diols having molecular weights from 62 to 200, also using
d) diols containing carboxyl, carboxylate, sulphonic acid and/or sulphonate groups and having a molecular weight below 500
in an NCO/OH-equivalent ratio of less than 1: 1, any carboxyl or sulphonic acid groups present having been at least partly converted into carboxylate or sulphonate groups after the reaction, characterised by a content of
e) urethane groups $-NH-CO-O-$ of from 25 to 40 % by weight
f) hydroxyl groups of from 0.03 to 1.5 % by weight
g) carboxylate groups $-COO^-$ and/or sulphonate groups $-SO_3^-$ of from 10 to 80 milliequivalents per 100 g and
h) tri- and/or tetra-ethylene glycol units $-(OCH_2CH_2-)_{3-4}$ incorporated in each case between two urethane groups or between one urethane group and hydrogen of from 10 to 40 % by weight.
2. Use of the polyurethane anionomers according to Claim 1 as sizes in the textile industry.

**Revendications**

1. Anionomères de polyuréthannes hydrosolubles, ultrafiltrables, qui ont été préparés, le cas échéant, avec utilisation conjointe de 5 % en moles au maximum dans chaque cas d'alcools mono- et/ou polyvalents par rapport à la quantité totale des composants b) à d) ci-après, par réaction de
a) des diisocyanates organiques de poids moléculaire 160 à 300 avec
b) du tri- et/ou du tétra-éthylèneglycol,
c) le cas échéant d'autres diols aliphatiques de poids moléculaire 62 à 200, avec utilisation conjointe de
d) des diols portant des groupes carboxyle, carboxylate, acide sulfonique et/ou sulfonate, de poids moléculaire inférieur à 500,
à un rapport des équivalents NCO/OH inférieur à 1: 1, les groupes carboxyle ou acide sulfonique éventuellement présents ayant été convertis après la réaction, en partie au moins, en groupes carboxylate ou sulfonate, caractérisés en ce qu'ils contiennent
e) de 25 à 40 % de groupes uréthanne $-NH-CO-O-$,
f) de 0,03 à 1,5 % en poids de groupes hydroxy,
g) des groupes carboxylate $-COO^{(-)}$ et/ou des groupes sulfonate $-SO_3^{(-)}$ en proportions de 10 à 80 milliéquivalents pour 100 g et
h) des motifs de tri- et/ou de tétraéthylèneglycol $-(O-CH_2-CH_2-)_{3-4}$ insérés dans chaque cas entre deux groupes uréthanne ou entre un groupe uréthanne et l'hydrogène, en proportions de 10 à 40 % en poids.
2. Utilisation des anionomères de polyuréthanne selon la revendication 1 en tant que produits d'ensimage dans l'industrie textile.